# EUROPEAN PATENT APPLICATION

(11) **EP 2 146 100 A2**
(43) Date of publication of application: **20.01.2010**
(21) Application number: 09009200.8
(22) Date of filing: 15.07.2009
(51) Int. Cl.: F16B 2/18, D03J 1/00, D03D 49/02, B23Q 1/00, B65H 49/32, B65H 19/30

(54) **Bearing closure for clamping a part in a bearing seat**

(30) Priority: 16.07.2008 BE 200800398
(71) Applicant: Picanol N.V., 8900 Ieper (BE)
(72) Inventor: Vancayzeele, Bernard, 8900 Ieper (BE); Vandermarliere, Stefaan, 8900 Ieper (BE)
(74) Representative: Dauster, Katja

(57) **Abstract**

Machine with bearing closure and bearing closure for clamping a part (4) in a bearing (2) of a weaving machine, in which the bearing closure (6) comprises a clamp element (8) which is arranged so as to be able to rotate about an eccentrically arrangeable shaft (7) and which can form an overcentre mechanism (9) together with the part (4), and in which the bearing closure (6) comprises elements (12, 13) which can cooperate with a tool (14) to open or close the bearing closure (6).

## Description

The present invention relates to a bearing closure for clamping a part in a bearing, in which the bearing closure comprises a clamp element which is arranged so as to be able to rotate about an eccentrically arrangeable shaft and which can form an overcentre mechanism together with the part.

It is known from EP 491 412 A1 to secure a beam in a bearing of a weaving machine by means of a bearing closure. The bearing closure according to EP 491 412 A1 comprises a clamp element which is rotatable about a point of rotation and which is elastically deformable and can cooperate with a beam. The clamp element is rotatable about an eccentrically arrangeable shaft, with the shaft being arranged eccentrically in such a manner that the clamp element can form an overcentre mechanism with the beam. This prevents the clamp element from rotating from a position in which the beam is clamped to a position in which the beam is not clamped. A lever arm is attached to the clamp element to allow an operator to open or close the bearing closure.

It is an object of the invention to provide a bearing closure which is of simple design.

To achieve this object, the bearing closure according to the invention comprises elements which can cooperate with a tool to open or close the bearing closure.

The invention offers the advantage that the bearing closure comprises a simple clamp element which can be opened or closed in a simple manner with the aid of a tool. When the part is clamped, the clamp element is elastically deformed and forms an overcentre mechanism with the part. The part may consist of a part for a machine, such as a warp beam, a cloth beam or another beam for a weaving machine or for a textile machine, which part is provided with shaft ends.

Further features and advantages of the invention are described in the following description of the embodiments illustrated in the drawings.
Fig 1 shows a perspective view of a bearing closure according to the invention for a weaving machine in an open position;
Fig. 2 shows a side view of the bearing closure from Fig. 1 with a part to be clamped;
Fig. 3 shows a perspective view of the bearing closure from Fig. 1 in a closed position;
Fig. 4 shows a side view of the bearing closure from Fig. 3 with a clamped part;
Fig. 5 shows an enlarged view of a portion of the bearing closure in an open position;
Fig. 6 shows a cross section along line VI-VI from Fig. 5;
Fig. 7 shows an enlarged view of a portion of the bearing closure in a closed position;
Fig. 8 shows a tool for opening or closing the bearing closure;
Fig. 9 shows the bearing closure in the position from Fig. 4 while it cooperates with the tool.

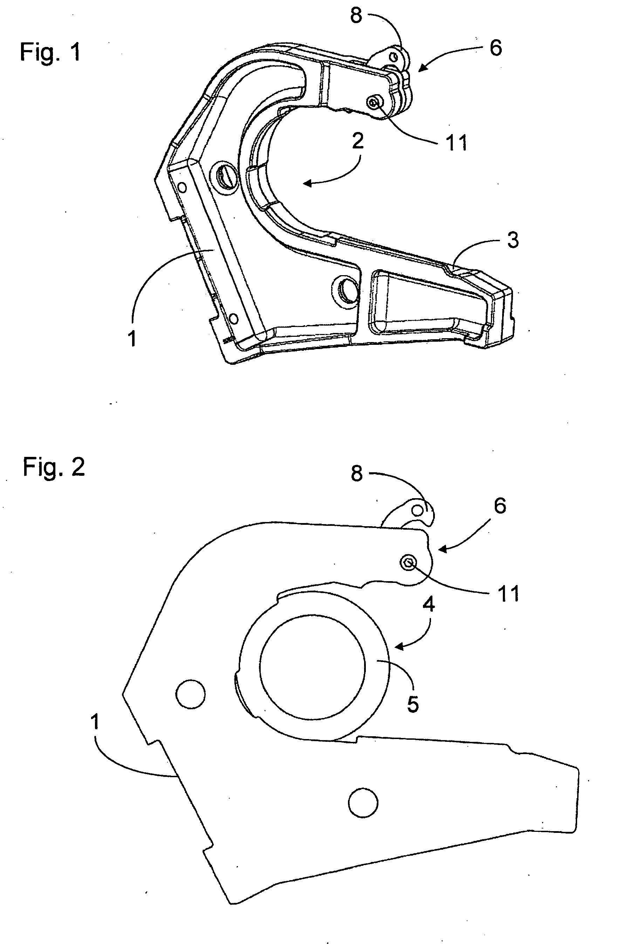

Figs. 1 to 4 show a portion of a weaving machine which comprises a support element 1 in which a bearing 2 is formed. This support element 1 can be attached to a side portion (not shown) of the weaving machine in a known manner. Near the bearing 2, a support surface 3 is provided in order to guide a part 4 to be clamped to the bearing 2. The part 4 comprises a shaft end 5 which can be clamped in the bearing 2. The part 4 may consist of a beam, for example a warp beam or a cloth beam. The bearing 2 extends across a certain segment in order to enable the shaft end 5 to be fitted in the bearing 2 or to be removed from the bearing 2.

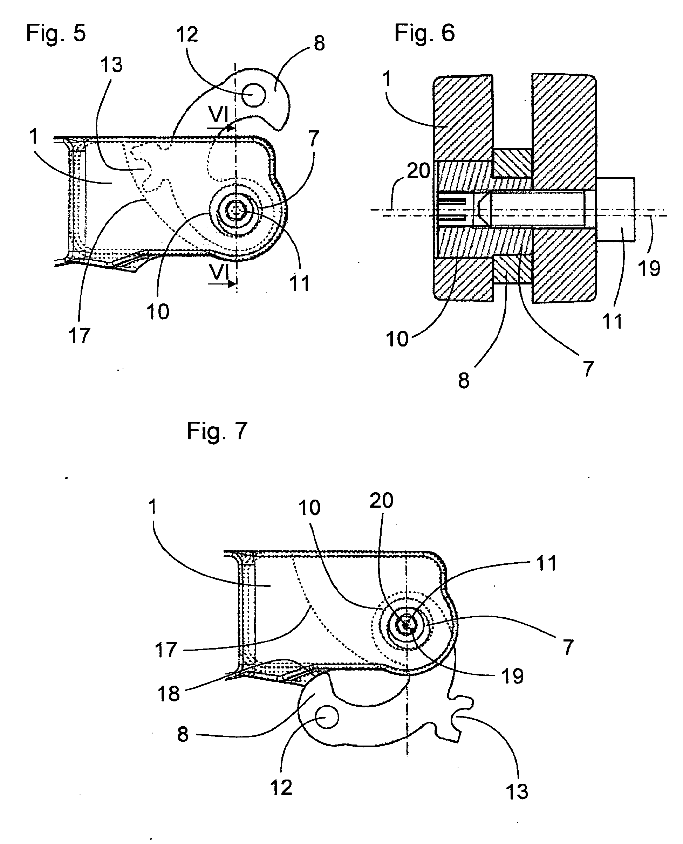

Near the bearing 2, a bearing closure 6 according to the invention is arranged. The bearing closure 6 is in this case arranged almost opposite the support surface 3 and is situated on the top side of the bearing 2. As is indicated in Figs. 5 to 7, the bearing closure 6 comprises a clamp element 8 which is arranged to as to be able to rotate about an eccentrically arrangeable shaft 7. The clamp element 8 can form an overcentre mechanism 9 together with the shaft end 5 of the part 4. The shaft 7 is arranged on the support element 1 by means of a shaft journal 10 which is eccentrically arranged on the shaft 7. The axis 19 of the shaft 7 is in this case eccentric with respect to the axis 20 of the shaft journal 10. The clamp element 8 is in this case elastically deformable so as to be able to form the overcentre mechanism 9. The shaft journal 10 may be fixedly attached to the support element 1 by means of a fixation element 11, for example a bolt. As a result thereof, the position of the shaft 7 is adjustable. This not only allows an overcentre mechanism 9 to be produced, but also allows the force with which the clamp element 8 pushes on the part 4 to be adjusted.

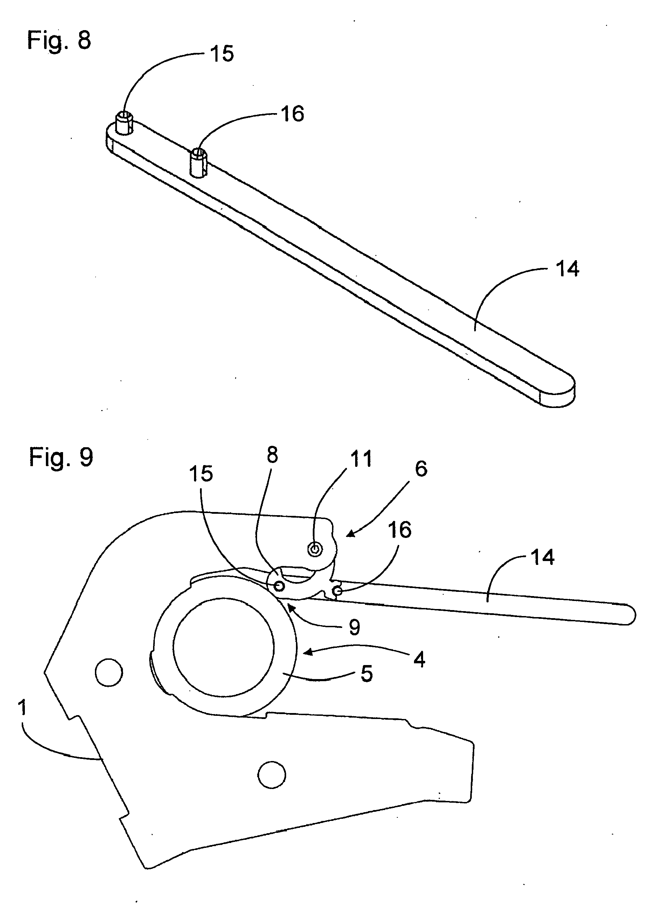

The clamp element 8 comprises elements 12, 13 which can cooperate with a tool 14 in order to open or close the bearing closure 6. The element 12 consists of a bore in the clamp element 8, while the element 13 consits of a fork-shaped element which is arranged on the clamp element 8. In the embodiment from Fig. 8, the tool 14 comprises two elements 15 and 16, for example pins, which can cooperate with the elements 12 and 13, more particularly the pin 15 can cooperate with the bore 12, while the pin 16 can cooperate with the fork-shaped element 13.

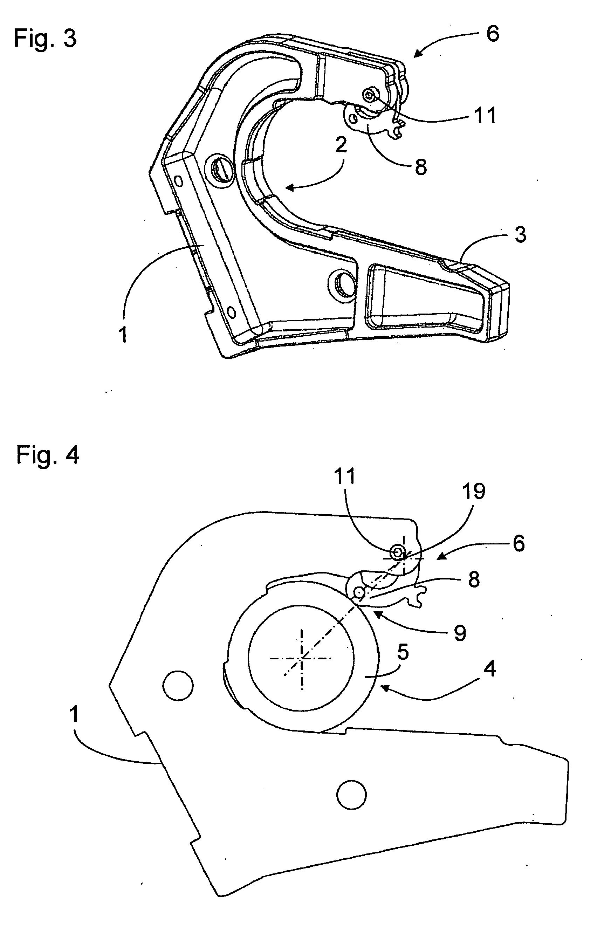

In the position shown in Fig. 5, the clamp element 8 can rest against an edge 17 of the support element 1 by means of the element 13. In the position shown in Figs. 3, 4 or 9, the clamp element 8 rests against an edge 18 of the support element 1. The edge 18, more particularly the position of the edge 18 with respect to the clamp element 8, also determines the force with which the clamp element 8 pushes on the part 4.

If the tool 14 cooperates with the clamp element 8, as is illustrated in Fig. 4 or 7, the clamp element 8 can elastically deform upon rotation of the clamp element 8 in order to move past the part 4 into a position shown in Fig. 2 or 5. Subsequently, a part 4 can be clamped when the clamp element 8 is rotated back into the other direction from the position in Fig. 2 or 5 to the position shown in Fig. 4 or 7. A relatively large force is required to make this rotation possible, so that a tool 14 is required in order to release or clamp a clamped part 4. The tool can be moved manually or by means of a robot and to this end has a suitable shape. The method which uses a bearing closure 6 according to the invention makes it possible to clamp or not clamp a part 4 at a bearing 2 by means of a bearing closure 6 which can cooperate with a tool 14 which can cooperate with elements 12, 13 which are provided on the clamp element 8.

The bearing closure according to the invention can be used with various types of machines, such as textile machines, more particularly with any type of weaving machine, which comprises a part such as a warp beam or a cloth beam. This may be an airjet weaving machine, a gripper weaving machine, a water jet weaving machine, a projectile weaving machine or yet another type of weaving machine.

Obviously, the bearing closure according to the invention is not limited to the embodiments described by way of example and illustrated in the figures. The bearing closure can, within the scope of protection of the claims, also be designed in accordance with different embodiments, shapes and dimensions. In addition, combinations of the illustrated embodiments are possible which are within the scope of protection of the claims.

## Claims

1. Bearing closure for clamping a part (4) in a bearing (2), in which the bearing closure (6) comprises a clamp element (8) which is arranged so as to be able to rotate about an eccentrically arrangeable shaft (7) and which can form an overcentre mechanism (9) together with the part (4), **characterized in that** the bearing closure (6) comprises elements (12, 13) which can cooperate with a tool (14) to open or close the bearing closure (6).

2. Bearing closure according to Claim 1, **characterized in that** the bearing closure (6) comprises an elastically deformable clamp element (8).

3. Bearing closure according to Claim 1 or 2, **characterized in that** the bearing closure (6) comprises an eccentrically arranged shaft (7).

4. Bearing closure according to one of Claims 1 to 3, **characterized in that** the part (4) is an element provided with shaft ends (5).

5. Bearing closure according to one of Claims 1 to 4, **characterized in that** the part (4) is a cloth beam.

6. Bearing closure according to one of Claims 1 to 4, **characterized in that** the part (4) is a warp beam.

7. Bearing closure according to one of Claims 1 to 6, **characterized in that** the bearing closure (6) comprises a clamp element (8) which is arranged to as to be able to rotate about an eccentrically arrangeable shaft (7).

8. Bearing closure according to one of Claims 1 to 7, **characterized in that** the bearing closure (6) is arranged almost opposite the support surface (3) that is provided in order to guide a part (4) to be clamped to the bearing (2).

9. Bearing closure according to one of Claims 1 to 8, **characterized in that** the bearing closure (6) is situated on the top side of the bearing (2).

10. Machine, **characterized in that** the machine comprises a bearing closure (6) according to one of Claims 1 to 9.
